# EUROPÄISCHE PATENTSCHRIFT

(11) **EP 1 104 875 B1**
(45) Veröffentlichungstag und Bekanntmachung des Hinweises auf die Patenterteilung: **29.10.2003**
(21) Anmeldenummer: 99123722.3
(22) Anmeldetag: 30.11.1999
(51) Int. Cl.: F24D 3/14

(54) **Dämmelement zum Verlegen von Heizungsrohren für Fussbodenheizungen**
Isolation element for laying heating pipes for under floor heating systems
Element d'isolation pour poser des tubes de chauffage pour chauffage par le sol

(43) Veröffentlichungstag der Anmeldung: 06.06.2001
(73) Patentinhaber: Roth Werke GmbH, 35232 Dautphetal (DE)
(72) Erfinder:
(74) Vertreter: Albrecht, Rainer Harald, Dr.-Ing.

(56) Entgegenhaltungen:
- EP-A- 0 368 804
- EP-A- 0 821 202
- DE-A- 2 853 043
- DE-A- 3 024 208
- DE-A- 3 346 998
- FR-A- 2 746 426

## Beschreibung

Die Erfindung betrifft ein Dämmelement zum Verlegen von Heizungsrohren für Fußbodenheizungen bestehend aus einer oberseitig ebenen Dämmplatte zur Wärme- und/oder Trittschalldämmung und einer Kunststoffauflage mit Noppen für eine klemmende Halterung von Heizungsrohren, wobei die Noppen als Näpfe ausgebildet sind, die nach unten offen sind und auf der Dämmplatte Hohlräume bilden.

Bei der Verlegung einer Fußbodenheizung wird die Bodenfläche mit den beschriebenen Dämmelementen so ausgelegt, daß eine Noppenfläche mit einheitlicher Rasterung resultiert. In die Noppenfläche werden Heizungsrohre, zumeist aus Kunststoff, eingelegt, und in einem letzten Arbeitsschritt wird eine Estrichschicht aufgebracht.

Bei der Verlegung einer Bodenfläche müssen Dämmelemente, die an eine Wand angrenzen, im Regelfall zugeschnitten werden. Damit der Zuschnitt mit handelsüblichen Schneidwerkzeugen, z. B. Klingenmessern möglich ist, sollte die Kunststoffauflage dünnwandig sein und aus einem Material bestehen, welches sich gut schneiden läßt. Ferner müssen die Noppen eine ausreichende Formstabilität besitzen, damit sie bei der Verlegung der Heizungsrohre und beim Begehen der Dämmplatten nicht niedergedrückt oder in sonstiger Weise beschädigt werden.

Ein Dämmelement des eingangs beschriebenen Aufbaus ist aus DE 198 15 023 C1 bekannt. Die Kunststoffauflage besteht aus einem geschäumten Kunststoffmaterial, insbesondere einem geschäumten Polypropylen, Polyethylen oder Polystyrol. Polyethylen und Polypropylen lassen sich schlecht schneiden. Mit dem geschäumten und verhältnismäßig dickwandigen Kunststoffmaterial können ferner nur einfache Noppengeometrien hergestellt werden. Ein präzises Ausbilden von Haltevorsprüngen, Hinterschnitten und dergleichen ist nicht oder nur unvollkommen möglich. Die Detailwiedergabe der Noppen ist verbesserungsbedürftig.

Bei einem aus DE 37 30 144 C2 bekannten Dämmelement besteht die Kunststoffauflage aus einer tiefgezogenen Hart-Polyvinylchlorid-Folie. Das Material ist zwar dünnwandig und ermöglicht die Ausbildung komplizierter Noppenformen mit Haltenasen, Hinterschnitten u.dgl., doch ist die Formstabilität der Noppen unzureichend. Die dünnwandigen Noppen würden den Belastungen beim Begehen des Dämmelementes nicht standhalten können. Daher weist die z. B. aus einem geschäumten Polystyrol bestehende unterseitige Dämmplatte angeformte Zapfen auf, die in die Noppen eingreifen. Dadurch, daß die Noppen nicht mehr hohl sondern mit Dämmaterial ausgefüllt sind, wird die zur Begehung des Dämmelementes erforderliche Stabilität erzeugt. Die Fertigung dieser Dämmelemente ist aufwendig und mit erheblichen Kosten für die Herstellung der unterseitigen Dämmplatten verbunden.

Bei einem aus EP 0 811 808 A2 bekannten Dämmelement ist zwischen der Dämmplatte und der Kunststoffauflage eine Zwischenschicht aus Kunststoffpartikeln und einem Bindemittel vorgesehen, welches den Innenraum der Noppen ausfüllt. Als Bindemittel wird vorzugsweise ein Schmelzkleber verwendet, der in den Noppen erhärtet und einen festen Noppenkern bildet. Durch den Kern verlieren die Noppen jede Elastizität, so daß Verbindungsfolienstreifen, wie sie z. B. aus DE 298 01 258 U1 bekannt sind, nicht mehr zur Überdeckung von Fugen, die bei der Auslegung einer Bodenfläche zwischen den Dämmelementen entstehen, verwendet werden können.

Weitere Dämmelemente zum Verlegen von Heizungsrohren sind in FR 2746426 A und in EP 0821 202A gezeigt.

Der Erfindung liegt die Aufgabe zugrunde, ein Dämmelement des eingangs beschriebenen Aufbaus und mit der eingangs beschriebenen Zweckbestimmung anzugeben, das sich durch Trittstabilität und gute Detailwiedergabe bei komplizierten Noppenformen auszeichnet und auf Baustellen leicht zuschneiden läßt.

Zur Lösung dieser Aufgabe lehrt die Erfindung, daß die Kunststoffauflage aus einem thermoplastischen Polyester besteht. Vorzugsweise wird Polyethylenterephthalat (PETP) oder Polybutylenterephthalat (PBTP) eingesetzt. Die Formgebung der Kunststoffauflage erfolgt vorzugsweise durch einen Tiefziehvorgang.

PETP ist sowohl als amorphes als auch als teilkristallines Material einsetzbar. PBTP liegt als teilkristallines Polymer vor. Beide Materialien zeichnen sich durch eine hohe Härte, gute Zug- und Biegefestigkeitswerte, hohe Schlagzähigkeit und Kerbschlagzähigkeit aus. PETP und PBTP lassen sich durch Tiefziehen gut verarbeiten, wobei kurze Tiefziehzeiten erreicht werden. Dank eines guten Fließverhaltens können komplizierte Noppengeometrien hergestellt werden, wobei eine gleichmäßige Wanddickenverteilung möglich ist und eine gute Detailwiedergabe realisiert werden kann. Sehr geringer Schrumpf des Materials und hohe Maßgenauigkeit erleichtern das Entformen von Hinterschnitten. Für die erfindungsgemäße Anwendung ist ferner bedeutungsvoll, daß sich das Material gut schneiden läßt. Neben PETP und PBTP können auch thermoplastische Copolyester eingesetzt werden, sofern ihre mechanischen Eigenschaften durch entsprechende Auswahl der Ausgangsverbindungen (Dicabonsäuren, Diolen) vergleichbar sind mit Polyethylenterephthalat und Polybutylenterephthalat.

Gemäß einer bevorzugten Ausführung der Erfindung ist die Noppenanordnungen der Kunststoffauflage aus gleichen quadratischen Flächen mit jeweils acht ringförmig um den Mittelpunkt des Quadrates angeordneten Noppen aufgebaut, wobei der Grundriß der Noppen als gleichschenkliges Dreieck mit gerundeten Ecken ausgebildet ist und wobei der Abstand zwischen den Noppen so gewählt ist, daß das zu verlegende Rohr bezogen auf die Flächen des Quadrates in Querrichtung, Längsrichtung oder mit diagonaler Ausrichtung zwischen die zueinander parallelen Wandflächen benachbarter Noppen einsetzbar ist. Die Noppen weisen zweckmäßig Hinterschneidungen zur Fixierung eines zwischen die Noppen eingelegten Rohres auf. Ferner kann die Kunststoffauflage bodenseitig angeformte Schwellen aufweisen, die zwischen den Noppen angeordnet sind und ein in die Noppenflächen eingelegtes Rohr als Distanzelemente mit bodenseitigem Abstand zur Auflagefläche der Kunststoffauflage halten. Durch die Abstandshalterungen ist gewährleistet, daß die Heizungsrohre in der Estrichmasse eingebettet sind.

Bei der Auslegung einer Bodenfläche mit Dämmelementen dürfen keine Fugen entstehen, in die Estrich eindringen kann. Eine fugenfreie Verlegung ist sichergestellt, wenn die Dämmplatte gemäß einer weiteren Ausgestaltung der Erfindung an den Außenkanten Anschlußausbildungen aufweist, so daß Dämmelemente mit überlappenden Randabschnitten der Dämmplatten zu einer Bodenfläche zusammensetzbar sind. Gemäß einer bevorzugten Ausführung der Erfindung steht die Dämmplatte an einer Längsseite und einer Stirnseite des Dämmelementes über, wobei die Dicke des bodenseitig aufliegenden Überstandes kleiner ist als die Dicke der Wärme- bzw. Trittschalldämmung. An der anderen, bis zum Rand mit der Kunststoffauflage belegten Längs- und Stirnseite des Dämmelementes weist die Dämmplatte eine bodenseitige Hinterschneidung auf, die komplementär zu dem Überstand ausgebildet ist. Eine ordnungsgemäße Verlegung der Dämmelemente ist insbesondere dann sichergestellt, wenn der randseitige Überstand der Dämmplatte ein Verzahnungsprofil mit mindestens einem randseitigen Steg sowie einer Nut aufweist. Durch eine Verzahnung der sich überlappenden Randabschnitte ist ausgeschlossen, daß die Dämmelemente während der Verlegearbeit gegeneinander verrutschen können.

Eine sehr vorteilhafte Ausgestaltung des erfindungsgemäßen Dämmelementes, die ebenfalls eine fugenfreie Verlegung ermöglicht, sieht vor, daß die Dämmplatte als rechteckförmige Platte mit geraden Schnittkanten ausgebildet ist und daß die Kunststoffauflage an einer Längsseite und einer Stirnseite des Dämmelementes übersteht, wobei die überstehenden Randstreifen mindestens eine Noppenreihe aufweisen, deren Noppen auf Anschlußnoppen angrenzender Dämmelemente aufsteckbar sind. Die Anschlußnoppen sind entlang der anderen Längsseite und anderen Stirnseite des Dämmelementes angeordnet. Die Dämmplatte kann bei dieser Ausführung aus preiswertem, handelsüblichem Tafelmaterial zugeschnitten werden.

Im folgenden wird die Erfindung anhand einer lediglich ein Ausführungsbeispiel darstellenden Zeichnung erläutert. Es zeigen in schematischer Darstellung:
- Fig. 1: die Draufsicht auf ein Dämmelement zum Verlegen von Heizungsrohren für Fußbodenheizungen,
- Fig. 2: eine Seitenansicht des in Fig. 1 dargestellten Gegenstandes aus der Blickrichtung A in Fig. 1,
- Fig. 3: in vergrößerter Darstellung einen Ausschnitt aus Fig. 2,
- Fig. 4: ebenfalls in vergrößerter Darstellung einen Ausschnitt aus Fig. 1,
- Fig. 5: eine weitere Ausführung des erfindungsgemäßen Dämmelementes in Form eines randseitigen Ausschnittes in der Schnittebene VI-VI aus Fig. 6,
- Fig. 6: eine Draufsicht auf den in Fig. 5 dargestellten Überlappungsbereich,
- Fig. 7: eine weitere Ausgestaltung der Noppen zur Fixierung von Heizungsrohren.

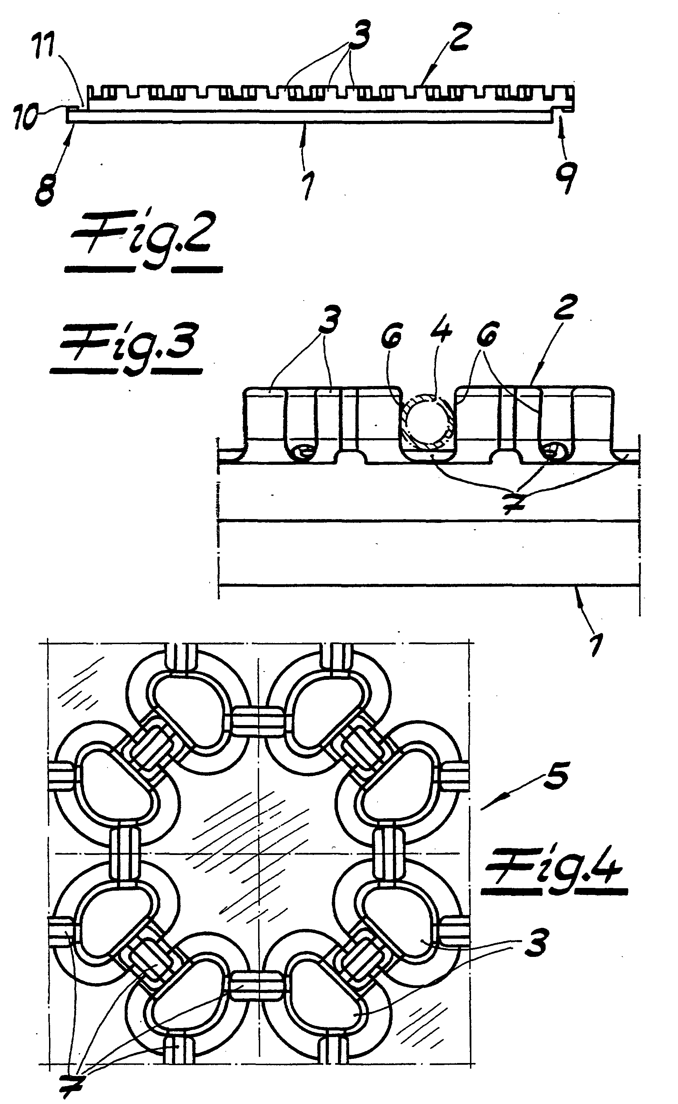

Das in den Figuren dargestellte Dämmelement dient zum Verlegen von Heizungsrohren für Fußbodenheizungen. Es besteht aus einer oberseitig ebenen Dämmplatte 1 zur Wärme- und/oder Trittschalldämmung, z. B. einer geformten Polystyrolplatte, und einer Kunststoffauflage 2 mit Noppen 3 für eine klemmende Halterung von Heizungsrohren 4. Die Noppen 3 sind als Näpfe ausgebildet, die nach unten offen sind und auf der Dämmplatte 1 Hohlräume bilden (Fig. 3). Die Kunststoffauflage 2 und die Dämmplatte 1 sind fest miteinander, z.B. durch Verkleben, verbunden.

Die Kunststoffauflage 2 besteht aus Polyethylenterephthalat (PETP), Polybutylenterephthalat (PBTP) oder einem anderen thermoplastischen Polyester/Copolyester, dessen mechanische Eigenschaften vergleichbar sind mit den mechanischen Eigenschaften von PETP oder PBTP. Die Kunststoffauflage 2 ist durch Tiefziehen hergestellt. Polyethylenterephthalat bzw. Polybutylenterephthalat verleihen der Kunststoffauflage eine hohe mechanische Festigkeit (Zugfestigkeit, Biegefestigkeit), extreme Schlagzähigkeit und hohe Härte. Die Noppen 3 sind bereits bei einer geringen Wandstärke trittstabil und können aufgrund des gewählten Materials relativ komplizierte Formen aufweisen. Das Kunststoffmaterial läßt sich ohne Gefahr einer Splitterbildung schneiden, so daß die Dämmelemente z. B. zur Anpassung an Wandflächen auf der Baustelle mit üblichen Schneidwerkzeugen zugeschnitten werden können.

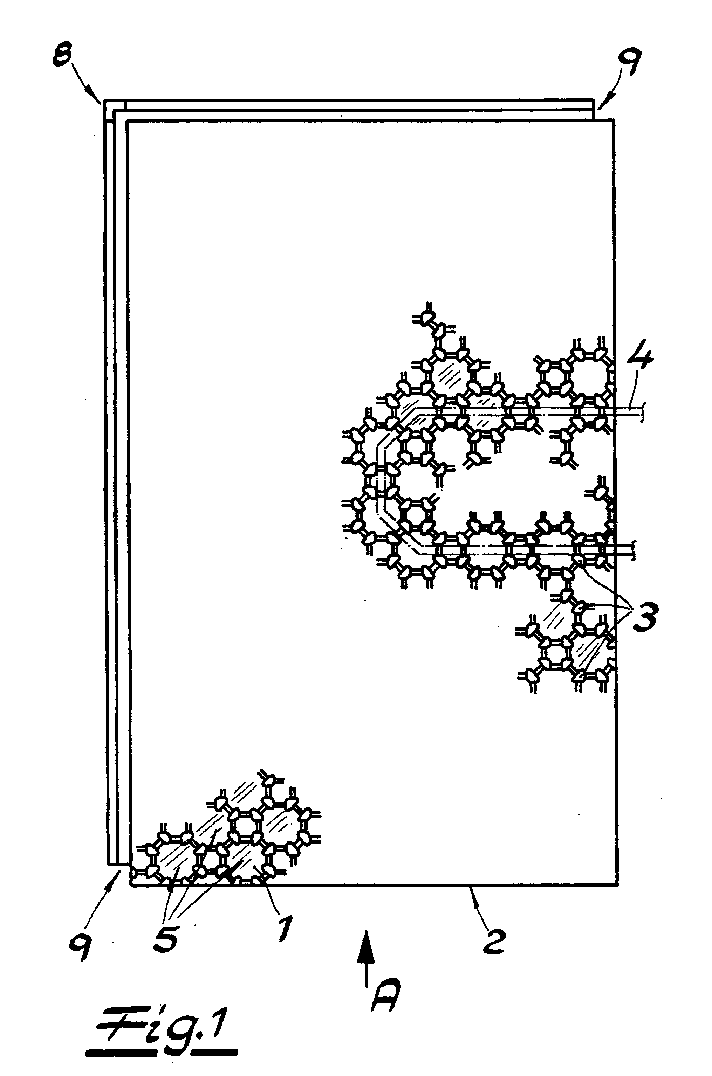

Einer vergleichenden Betrachtung der Fig. 1 und 4 entnimmt man, daß die Noppenanordnungen der Kunststoffauflage aus gleichen quadratischen Flächen 5 mit jeweils acht ringförmig um den Mittelpunkt des Quadrates angeordneten Noppen 3 aufgebaut sind. Der Grundriß der Noppen 3 ist als gleichschenkliges Dreieck mit gerundeten Ecken ausgebildet. Der Abstand a zwischen den Noppen 3 ist so gewählt, daß das zu verlegende Rohr 4 bezogen auf die Fläche des Quadrates in Querrichtung, Längsrichtung oder mit diagonaler Ausrichtung zwischen die zueinander parallelen Wandflächen benachbarten Noppen 3 einsetzbar ist. Die Noppen 3 weisen Hinterschneidungen zur Fixierung des Rohres 4 auf. Im Ausführungsbeispiel besteht die Hinterschneidung aus einer vom Kopf zum Fußende verlaufenden Schräge 6 der Klemmflächen, die einige Winkelgrade beträgt (Fig. 3). Ferner können an die Noppen 3 Haltevorsprünge 13 angeformt sein, wie dies in Fig. 7 angedeutet ist. Ferner weist die Kunststoffauflage bodenseitig angeformte Schwellen 7 auf, die zwischen den Noppen 3 angeordnet sind und ein in die Noppenfläche eingelegtes Rohr 4 als Distanzelemente mit einem bodenseitigen Abstand zur Auflagefläche der Kunststoffauflage halten.

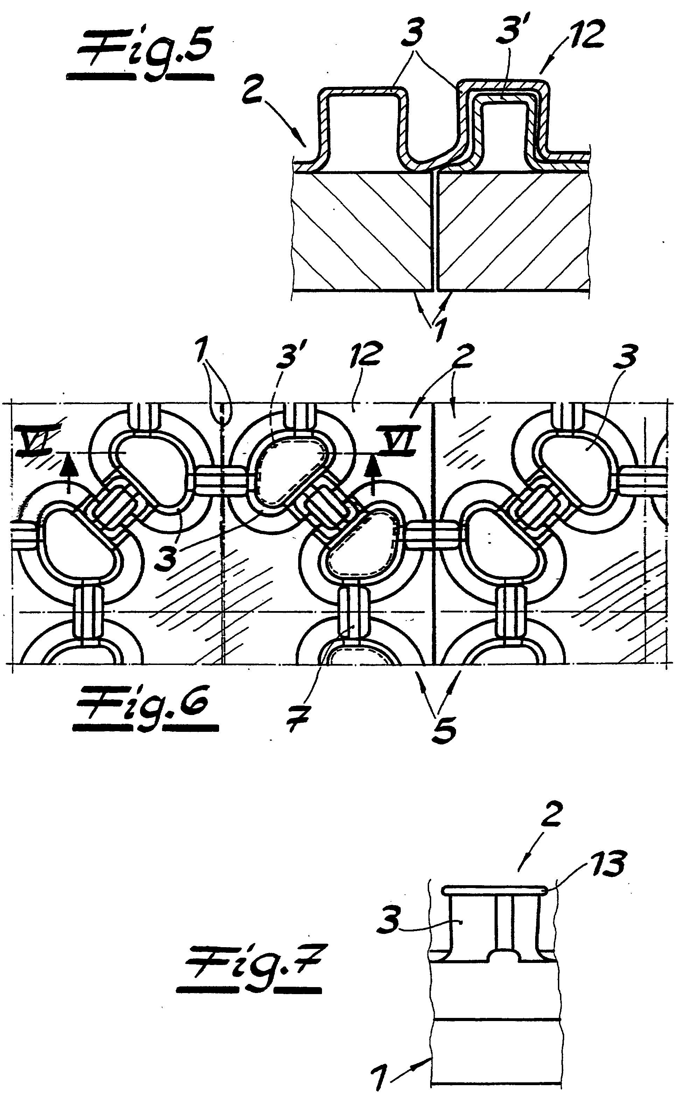

Die Dämmplatte 1 weist an den Außenkanten Anschlußausbildungen 8, 9 auf, so daß Dämmelemente 1 mit überlappenden Randabschnitten der Dämmplatten zu einer Bodenfläche zusammensetzbar sind. Die Gestaltung der Anschlußausbildungen 8, 9 geht aus den Fig. 1 und 2 hervor. Die Dämmplatte 1 steht an einer Längsseite und einer Stirnseite des Dämmelementes über, wobei die Dicke des bodenseitig aufliegenden Überstandes 8 kleiner ist als die Dicke der Wärme- bzw. Trittschalldämmung. An der anderen, bis zum Rand mit der Kunststoffauflage 2 belegten Längs- und Stirnseite des Dämmelementes weist die Dämmplatte 1 eine bodenseitige Hinterschneidung 9 auf, die komplementär zu dem Überstand 8 ausgebildet ist. Der Überstand 8 besitzt ein Verzahnungsprofil aus einem randseitigen Steg 10 sowie einer Nut 11.

Bei der in den Figuren 5 und 6 dargestellten Ausführung des erfindungsgemäßen Dämmelementes ist die Dämmplatte 1 als rechteckförmige Platte mit geraden Schnittkanten ausgebildet. Die Kunststoffauflage 2 steht an einer Längsseite und einer Stirnseite des Dämmelementes über, wobei die überstehenden Randstreifen 12 mindestens eine Noppenreihe aufweisen, deren Noppen 3 auf Anschlußnoppen 3' eines angrenzenden Dämmelementes aufsteckbar sind. Im Ausführungsbeispiel entspricht die Anordnung der Noppen im Überlappungsbereich der Noppenanordnung, die auf der gesamten Kunststoffauflage verwirklicht ist. Die an dem überstehenden Randstreifen 12 angeformten Noppen 3 und die übrigen Noppen 3 der Kunststoffauflage sind identisch ausgebildet. Die Anschlußnoppen 3' sind etwas kleiner ausgebildet, so daß sie mit Spiel in die an dem überstehenden Randstreifen 12 des benachbarten Dämmelementes angeformten Noppen 3 eingreifen. Die Anschlußnoppen 3' weisen im Ausführungsbeispiel einen dreieckförmigen Querschnitt auf, können aber auch von der Geometrie der Noppen 3 abweichen und z. B. zylindrisch ausgebildet sein. Im Rahmen der Erfindung liegt es grundsätzlich auch, daß die Anschlußnoppen an dem überstehenden Randstreifen eine andere Geometrie und/oder andere Teilung aufweisen als die auf der Trittfläche angeordneten Anschlußnoppen. In einem solchen Fall muß allerdings darauf geachtet werden, daß die Abstände und Teilung zwischen den Noppen so gewählt ist, daß die Quer-, Längs- und Diagonalverlegung von Rohren nicht behindert wird.

## Patentansprüche

1. Dämmelemente zum Verlegen von Heizungsrohren für Fußbodenheizungen bestehend aus einer oberseitig ebenen Dämmplatte (1) zur Wärme - und/oder Trittschalldämmung und einer Kunststoffauflage (2) mit Noppen (3) für eine klemmende Halterung von Heizungsrohren (4), wobei die Noppen (3) als Näpfe ausgebildet sind, die nach unten offen sind und auf der Dämmplatte (1) Hohlräume bilden, **dadurch gekennkennzeichnet, daß** die Kunststoffauflage (2) aus einem thermoplastischen Polyester besteht.

2. Dämmelement nach Anspruch 1, **dadurch gekennzeichnet, daß** die Kunststoffauflage (2) aus Polyethylenterephthalat (PETP) besteht.

3. Dämmelement nach Anspruch 1, **dadurch gekennzeichnet, daß** die Kunststoffauflage (2) aus Polybutylenterephthalat (PBTP) besteht.

4. Dämmelement nach einem der Ansprüche 1 bis 3, **dadurch gekennzeichnet, daß** die Noppenanordnung der Kunststoffauflage (2) aus gleichen quadratischen Flächen (5) mit jeweils acht ringförmig um den Mittelpunkt des Quadrates angeordneten Noppen (3) aufgebaut ist, wobei der Grundriß der Noppen (3) als gleichschenkliges Dreieck mit gerundeten Ecken ausgebildet ist und wobei der Abstand (a) zwischen den Noppen (3) so gewählt ist, daß das zu verlegende Rohr (4) bezogen auf die Fläche des Quadrates in Querrichtung, Längsrichtung oder mit diagonaler Ausrichtung zwischen die zueinander parallelen Wandflächen benachbarter Noppen (3) einsetzbar ist.

5. Dämmelement nach einem der Ansprüche 1 bis 4, **dadurch gekennzeichnet, daß** die Noppen (3) Hinterschneidungen (6) zur Fixierung eines zwischen die Noppen (3) eingelegten Rohres (4) aufweisen.

6. Dämmelement nach einem der Ansprüche 1 bis 5, **dadurch gekennzeichnet, daß** die Kunststoffauflage (2) bodenseitig angeformte Schwellen (7) aufweist, die zwischen den Noppen (3) angeordnet sind und ein in die Noppenfläche eingelegtes Rohr (4) als Distanzelemente mit einem bodenseitigen Abstand zur Auflagefläche der Kunststoffauflage (2) halten.

7. Dämmelement nach einem der Ansprüche 1 bis 6, **dadurch gekennzeichnet, daß** die Dämmplatte (1) an den Außenkanten Anschlußausbildungen (8, 9) aufweist, so daß Dämmelemente mit überlappenden Randabschnitten der Dämmplatten (1) zu einer Bodenfläche zusammensetzbar sind.

8. Dämmelement nach Anspruch 7, **dadurch gekennzeichnet, daß** die Dämmplatte (1) an einer Längsseite und einer Stirnseite des Dämmelementes übersteht, wobei die Dicke des bodenseitig aufliegenden Überstandes (8) kleiner ist als die Dicke der Wärme- bzw. Trittschalldämmung, und daß die Dämmplatte (1) an der anderen, bis zum Rand mit der Kunststoffauflage (2) belegten Längs- und Stirnseite des Dämmelementes eine bodenseitige Hinterschneidung (9) aufweist, die komplementär zu dem Überstand (8) ausgebildet ist.

9. Dämmelement nach Anspruch 8, **dadurch gekennzeichnet, daß** der randseitige Überstand (8) der Dämmplatte (1) ein Verzahnungsprofil mit mindestens einem randseitigen Steg (10) sowie einer Nut (11) aufweist.

10. Dämmelement nach einem der Ansprüche 1 bis 6, **dadurch gekennzeichnet, daß** die Dämmplatte (1) als rechteckförmige Platte mit geraden Schnittkanten ausgebildet ist, daß die Kunststoffauflage (2) an einer Längsseite und einer Stirnseite des Dämmelementes übersteht, wobei die überstehenden Randstreifen (12) mindestens eine Noppenreihe aufweisen, deren Noppen (3) auf Anschlußnoppen (3') angrenzender Dämmelemente aufsteckbar sind, und daß die Anschlußnoppen (3') entlang an der anderen Längsseite und anderen Stirnseite des Dämmelementes angeordnet sind.

## Claims

1. An insulating element for laying heating pipes for floor heating systems comprising an insulating plate (1) which is flat on the top for thermal and/or foot noise damping and a plastic overlay (2) with knobs (3) for clamping support of heating pipes (4), wherein the knobs (3) are constructed as cups which are open downwards and form cavities on the insulating plate (1),
**characterised in that**
the plastic overlay (2) consists of a thermoplastic polyester.

2. The insulating element according to claim 1, **characterised in that** the plastic overlay (2) consists of polyethylene terephthalate (PETP).

3. The insulating element according to claim 1, **characterised in that** the plastic overlay (2) consists of polybutylene terephthalate (PBTP).

4. The insulating element according to any one of claims 1 to 3, **characterised in that** the knob arrangement of the plastic overlay (2) is constructed of equal square areas (5) each having eight knobs (3) arranged in a ring shape about the mid point of the square, wherein the outline of the knobs (3) is constructed as an equilateral triangle with rounded corners and wherein the distance (a) between the knobs (3) is selected so that the pipe (4) to be laid can be inserted between the wall surfaces of adjacent knobs (3) parallel one to the other, in the transverse direction, longitudinal direction or diagonal direction relative to the area of the square.

5. The insulating element according to any one of claims 1 to 4, **characterised in that** the knobs (3) have undercuts (6) for fixing a pipe (4) laid between the knobs (3).

6. The insulating element according to any one of claims 1 to 5, **characterised in that** the plastic overlay (2) has sills (7) moulded onto the bottom, which are arranged between the knobs (3) and hold a pipe (4) laid into the knob surface as spacer elements at a distance from the bearing surface of the plastic overlay (2) on the bottom side.

7. The insulating element according to any one of claims 1 to 6, **characterised in that** the insulating plate (1) has connecting structures (8, 9) on the outer edges so that insulating elements with overlapping edge sections of the insulating plates (1) can be combined to form a floor surface.

8. The insulating element according to claim 7, **characterised in that** the insulating plate (1) projects on one longitudinal side and one front face of the insulating element wherein the thickness of the projection (8) located at the bottom is smaller than the thickness of the thermal or foot noise damping and that the insulating plate (1) on the other longitudinal side and front face of the insulating element covered with the plastic overlay (2) as far as the edge, has an undercut (9) at the bottom which is constructed in a complementary fashion to the projection (8).

9. The insulating element according to claim 8, **characterised in that** the edge-side projection (8) of the insulating plate (1) has a toothed profile with at least one edge-side cross-piece (10) and a groove (11).

10. The insulating element according to any one of claims 1 to 6, **characterised in that** the insulating plate (1) is constructed as a rectangular-shaped plate with straight cut edges, that the plastic overlay (2) projects on one longitudinal side and one front face of the insulating element, wherein the projecting edge strips (12) have at least one row of knobs, which knobs (3) can be positioned on connecting knobs (3') of adjacent insulating elements and that the connecting knobs (3') are arranged along the other longitudinal side and the other front face of the insulating element.

## Revendications

1. Eléments d'isolation pour la pose de tuyaux de chauffage dans des chauffages par le sol, se composant d'une plaque isolante (1), à surface supérieure plane, pour l'isolation thermique et/ou phonique, ainsi que d'un support en plastique (2) avec des tétons ou organes (3) de serrage ou de coincement pour la fixation de tuyaux de chauffage (4), du type selon lequel les organes de serrage (3) sont conformés comme des coupelles ou cuvettes, qui sont ouvertes vers le bas et constituent des espaces creux sur la plaque isolante (1),
**caractérisés en ce que**
le support en plastique (2) est constitué d'un polyester thermoplastique.

2. Elément d'isolation selon la revendication 1, **caractérisé en ce que** le support en plastique (2) est constitué de polyéthylènetéréphtalate (PETP).

3. Elément d'isolation selon la revendication 1, **caractérisé en ce que** le support en plastique (2) est constitué de polybutylènetéréphtalate (PBTP).

4. Elément d'isolation selon l'une des revendications 1 à 3, **caractérisé en ce que** la disposition des organes de serrage (3) du support en plastique (2) est une structure de surfaces carrées (5) identiques comprenant chacune huit organes de serrage (3) selon une configuration annulaire par rapport au centre desdits carrés, les organes de serrage (3) étant conformés en coupe horizontale comme des triangles isocèles aux angles arrondis et la distance (a) entre les organes de serrage (3) étant choisie de façon que le tuyau (4) à poser est mis en place, dans le sens transversal, longitudinal ou en diagonale par rapport à la surface desdits carrés, entre les parois parallèles d'organes de serrage voisins.

5. Elément d'isolation selon l'une des revendications 1 à 4, **caractérisé en ce que** les organes de serrage (3) présentent des découpes arrière (6) pour la fixation d'un tuyau (4) introduit entre les organes de serrage (3).

6. Elément d'isolation selon l'une des revendications 1 à 5, **caractérisé en ce que** le support en plastique (2) présente des renflements (7) conformés côté sol, qui sont disposés entre les organes de serrage (3) et maintiennent un tuyau (4) introduit dans la surface entre lesdits organes, en tant qu'éléments de positionnement selon un intervalle, côté sol, par rapport à la surface d'appui du support en plastique (2).

7. Elément d'isolation selon l'une des revendications 1 à 6, **caractérisé en ce que** la plaque isolante (1) présente, le long de ses arêtes externes, des zones conformées de liaison ou de raccordement (8,9), de façon que les éléments d'isolation sont susceptibles d'être assemblés, par rapport à la surface du sol, avec chevauchement ou recouvrement des sections périphériques des plaques isolantes (1).

8. Elément d'isolation selon la revendication 7, **caractérisé en ce que** la plaque isolante (1) dépasse ou déborde sur une face longitudinale et une face frontale de l'élément d'isolation, l'épaisseur de la partie formant saillie (8), côté sol, étant plus petite que l'épaisseur de l'isolation thermique ou phonique, et **en ce que** la plaque isolante (1) présente, côté sol, une découpe arrière (9) le long des autres faces longitudinale et frontale dudit élément d'isolation, recouvertes par le support en plastique (2), ladite découpe arrière présentant un profil complémentaire de celui de la partie formant saillie (8).

9. Elément d'isolation selon la revendication 8, **caractérisé en ce que** la partie formant saillie (8) de la plaque isolante (1) présente un profil dentelé ou cannelé, avec au moins, à sa périphérie, une entretoise (10) ainsi qu'un écrou (11).

10. Elément d'isolation selon l'une des revendications 1 à 6, **caractérisé en ce que** la plaque isolante (1) est conformée comme une plaque rectangulaire avec des arêtes rectilignes, **en ce que** le support en plastique (2) vient en dépasse ou déborde le long d'une face longitudinale et d'une face frontale dudit élément d'isolation, les accotements ou zones périphériques (12) présentant au moins une série d'organes de serrage parmi lesquels des organes de serrage (3) sont insérés sur des organes de serrage et de jonction (3') d'éléments d'isolation contigus, et **en ce que** lesdits organes de serrage et de jonction (3') sont disposés le long des autres faces longitudinale et frontale dudit élément d'isolation.
